# EUROPEAN PATENT SPECIFICATION

(11) **EP 2 000 018 B1**
(45) Date of publication and mention of the grant of the patent: **02.06.2010**
(21) Application number: 08157663.9
(22) Date of filing: 05.06.2008
(51) Int. Cl.: A01D 41/12, A01F 12/40

(54) **Residue guide plate arrangement for combine harvesters**
Restführungsplattenanordnung für Mähdrescher
Agencement de plaque de guidage de résidus pour moissonneuses combinées

(30) Priority: 06.06.2007 GB 0710843
(43) Date of publication of application: 10.12.2008
(73) Proprietor: CNH Belgium N.V., 8210 Zedelgem (BE)
(72) Inventor: Van Overschelde, Daniël M.G., 8820 Torhout (BE); Willem, Peter J.P., 8470 Gistel (BE)
(74) Representative: CNH IP Department

(56) References cited:
- EP-A- 0 212 269
- EP-A- 1 529 434

## Description

The present invention relates to a combine harvester having a threshing mechanism for separating harvested crop into grain and crop residue and a guide mechanism for directing the flow of crop residue from the threshing mechanism along one of three paths, the guide mechanism comprising two deflection doors that can each be moved between two end positions.

A combine harvester of this type is described in detail in EP-A-1 529 434 . In the latter patent, crop residue directed along the first path is deposited in a swath on the ground for subsequent baling, that directed along the second path being evenly spread over the ground by a spreader and that directed along the third path being comminuted by a chopper before being dropped onto the ground. Crop residue is directed to flow along the first path when both doors are in their first positions, along the second path when both doors are in their second positions and along the third path when the first door is in its second position and the second door in its first position.

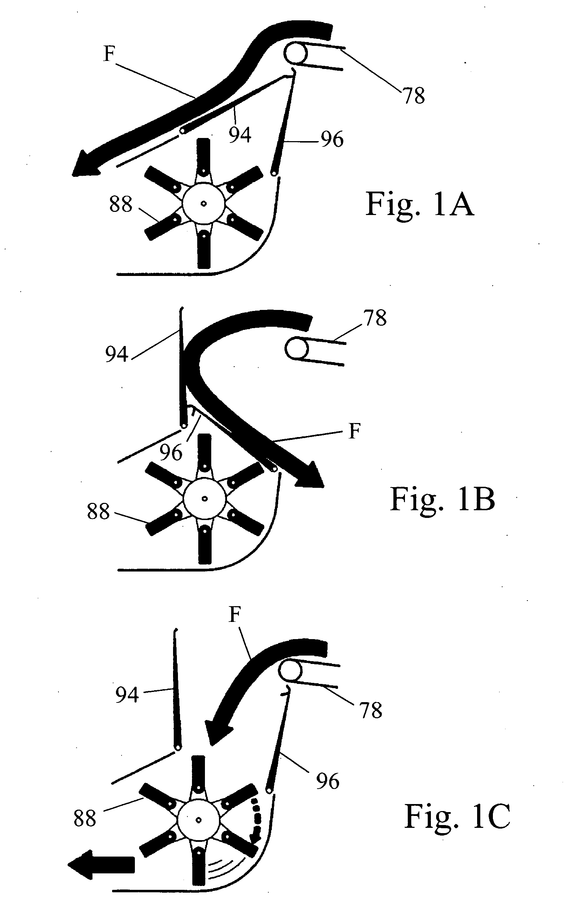

Figures 1A, 1B and 1C of the accompanying drawings represent schematically the positions of the doors of the guide mechanism in Figures 4, 7 and 12, respectively, of EP-A-1 529 434.

In Figure 1A, the two deflection doors 94 and 96 (to assist in cross-referencing the same reference numeral are used as in EP-A-1 529 434) are shown in their first positions corresponding to the first flow path, which is represented by a solid black arrow F. Here, the crop residue transported by the conveyor 78 passes over the first door 94 and is discharged as a narrow swath from the rear of the harvester.

In Figure 1B, corresponding to the second flow path, the two doors 94 and 96 are in their second positions. The raising of the first door 94 (also termed the chop/swath door) to its second position prevents the crop residue from being discharged from the rear of the harvester, while the pivoting of the second door 96 (also termed the deflector/kickback door) prevents the crop residue from entering into the chopper 88. As a result the crop residue follows a path that leads to a spreader (not shown in the accompanying drawings but designated 102 in EP-A-1 529 434) which distributes it evenly over the ground.

In Figure 1C, which shows the third flow path, the first door 94 is once again in its second position but the second door 96 is raised to its first position to uncover the chopper 88. All the crop residue from the conveyor 78 is now funnelled into the chopper 88 in which it is comminuted before it is discharged onto the ground.

The focus of the present invention is the mechanism employed to move the two deflection doors and to hold them in position while the harvester is operating in any one of the three possible modes for processing the crop residue.

EP-A-1 529 434 teaches connecting each of the doors to a handle to enable the doors to be moved manually and it also proposes automatic positioning of the doors, be it electronically, hydraulically or mechanically. Manual positioning of the doors is clearly the simplest and least expensive solution but some form of latching or locking mechanism is required to hold each of the two doors firmly in its end positions. Repositioning of manually operated doors in EP-A-1 529 434 therefore requires each of the handles to be separately unlatched before the doors are repositioned and latched after the doors have been moved to the desired position.

The present invention seeks to simplify the latching of manually operated doors in a combine harvester of the type described above so that, without intervention from the operator, each of the doors is held firmly against movement and vibration in each of its two end positions.

In accordance with the present invention, a combine harvester having a threshing mechanism for separating harvested crop into grain and crop residue and a guide mechanism for directing the flow of crop residue from the threshing mechanism along one of three paths, the guide mechanism comprising two deflection doors that can each be moved between two end positions, is characterised in that each of the doors of the guide mechanism is supported on a pivot shaft fitted with a crank arm and a resilient element connects the two crank arms to one another in such a manner that each door, independently of the position of the other door, is urged by the resilient element to remain in one of two stable end positions and passes through an unstable over-centre position when moved from one stable end position to the other.

Using a single resilient element, the invention enables each of the doors to have a toggle action. In each end position, each door experiences a force from the resilient element to hold the door stationary, not only preventing it from moving towards its other end position but also preventing it from vibrating while remaining in its current position.

The crank arms to which the resilient element is connected may be formed either as part of or separately from the handles that are used by the operator to reposition the doors.

While any suitable form of resilient element may be employed, it is preferred to use a gas strut that includes a damper. The damping effect of the gas strut will prevent the door from slamming into its new position after the over-centre position has been passed and will also assist in suppressing vibration of the doors.

It is preferred to provide sensors on the crank arms or the operating handles to indicate the current positions of the doors of the guide mechanism. The output signals from the sensors can be used, for example, to generate an alarm when the crop residue is flowing along the third path (into the chopper) while the chopper drive is disengaged, a condition which would inevitably result in a blockage. The signals from the sensors can also warn the operator to lower a hood of the spreader while the combine harvester is in swathing mode.

The invention will now be described in further detail, by way of example only, with reference to the accompanying drawings, in which:
Figs 1A, 1B and 1C are, as earlier described, schematic representations of the positions of the doors of the guide mechanism in the three possible modes of operation of the harvester,
Figures 2A, 2B and 2C are representations of a rear portion of a combine, in which the side panel is transparent, showing two operating handles when used to position the two doors of the guide mechanism in the modes shown in Figs 1A, 1B and 1C, respectively, together with a toggle mechanism serving to bias the doors towards, and maintain the doors in, their two end positions.

In the present invention, as in EP-A-1 529 434, the two doors 94 and 96 of a guide mechanism that deflects the crop residue in a combine harvester along one of three different paths are mounted on pivot shafts that project beyond one side panel of the harvester and operating handles are non-rotatably secured to the pivot shaft so that they can be turned manually to enable the operator to set the processing mode of the crop residue. The invention differs from the latter patent in the manner in which the doors and the handles are prevented from moving after their position has been set.

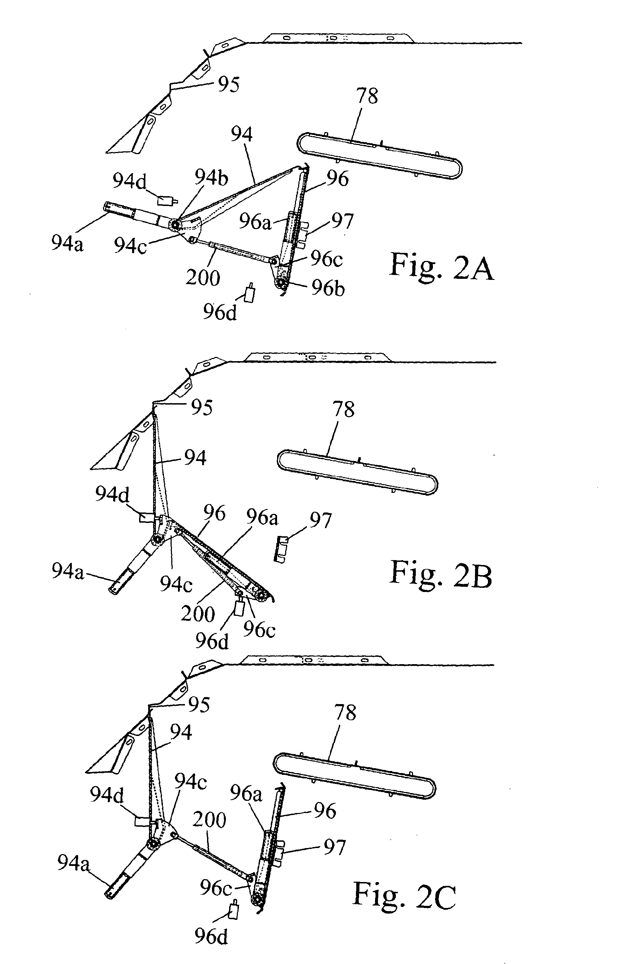

Figs 2A to 2C, show the handles 94a and 96a which are secured to the pivot shafts 94b and 96b of the doors 94 and 96 of the crop residue guide mechanism. Radially projecting crank arms 94c and 96c are also secured for rotation with the pivot shafts 94b and 96b and these are pivotably connected to the opposite ends of a gas strut 200 that acts at all times to push the crank arms 94c and 96c apart.

In Fig. 2A the two doors 94 and 96 are in their first or furthest clockwise position, corresponding the swathing mode represented by Fig. 1A. In Fig. 2B, the two doors are in their second or furthest counterclockwise position, corresponding to the spreader mode represented by Fig. 1B. In Fig. 2C, the door 96 is in its furthest clockwise position but the door 94 is in its furthest counterclockwise position, corresponding to the chopper mode represented by Fig. 1C.

The gas spring strut 200 and the crank arms 94 form a toggle mechanism which in all positions other than an unstable over-centre position applies a torque to bias the pivot shafts 94a and 94b of both doors towards one of their end positions. The over-centre for each crank arm is when the line connecting its axis to the connection point of the spring strut 200 coincides with the line of action of the gas strut 200.

In Fig. 2A, in which the doors are in their furthest clockwise positions, the torque applied by the strut 200 biases both of the doors clockwise thereby urging them into their desired positions and holding them again vibration. The door 96 is held in an upright position below the conveyor 78 against a pair of stops 97 that are affixed to the side panels of the combine. The door 94 is urged downwardly with its outer edge abutting a transverse slat on the outer edge of the door 96.

If the handle 94a is manually turned counterclockwise to set the guide mechanism in the chopper mode of Fig. 2C, effort must at first be applied to overcome the spring force of the gas strut 200. However, once the over-centre position is passed, the spring force of the strut 200 will urge the door 94 towards its most counterclockwise position shown in Fig. 2C. The outer edge of the door 94 is now urged against a notch 95 in a rear top plate of the combine. Because a gas strut 200 is used, as opposed to a simple spring, the movement from the over-centre position to the furthest counterclockwise position will be damped to avoid the door 94 slamming into place. This damping will also assist in suppressing vibrations during operation.

The same toggle action while passing through an over-centre position occurs if the handle 96 is now moved counterclockwise to set the guide mechanism in the spreader position shown in Fig. 2B. The strut 200 now urges the outer edge of door the 96 against a lower portion of the door 94.

It will be noted that each of the doors 94 and 96 passes through an over-centre position when moved between its end positions, regardless of the prevailing position of the other door.

It will also be noted that in each operative position, the outer edges of the doors 94, 96 are firmly held against an abutment, thereby reducing the load on the shafts 94b, 96b and preventing free vibration of the doors 94, 96 at their outer edges.

It is advantageous to provide sensors to indicate the prevailing positions of the two doors 94 and 96. It is convenient to fit such sensors to the operating handles 94a and 94b or to the crank arms 94c and 96c. The fact that the doors are always held firmly in their set positions by a spring force, adds to the reliability of the output signals of the sensors.

The output signals from the sensors, which may for example be mechanically or magnetically operated, can be used to generate an alarm when the crop residue is flowing into the chopper while the chopper drive is disengaged or to warn the operator to lower a hood of the spreader while the combine harvester is in swathing mode.

## Claims

1. A combine harvester having a threshing mechanism for separating harvested crop into grain and crop residue and a guide mechanism for directing the flow of crop residue from the threshing mechanism along one of three paths, the guide mechanism comprising two deflection doors (94, 96) that can each be moved between two end positions, **characterised in that** each of the doors of the guide mechanism is supported on a pivot shaft (94b, 96b) fitted with a crank arm (94c, 96c) and a resilient element (200) connects the two crank arms to one another in such a manner that each door, independently of the position of the other door, is urged by the resilient element to remain in one of two stable end positions and passes through an unstable over-centre position when moved from one stable end position to the other.

2. A combine harvester according to claim 1, **characterised in that** at least one of the crank arms (94c, 96c) to which the resilient element (200) is connected, is formed as part of an operating handle (94a, 96a) that is provided for repositioning the respective door (94, 96).

3. A combine harvester according to claim 1, **characterised in that** at least one of the crank arms (94c, 96c) to which the resilient element is connected, is formed separately from operating handles (94a, 96a) that are used to reposition the doors (94, 96).

4. A combine harvester according to any of the preceding claims, **characterised in that** the resilient element is a gas strut (200) that includes a damper.

5. A combine harvester according to any of the preceding claims, **characterised in that** sensors on the crank arms (94c, 96c) or the operating handles (94a, 96a) to indicate the current positions of the doors (94, 96) of the guide mechanism.

6. A combine harvester according to any of the preceding claims, **characterised in that** in each of the stable end positions, the outer edges of the deflection doors (94, 96) are firmly held against an abutment (95).

7. A combine harvesters according to claim 6, **characterised in that** at least one abutment is constituted by a notch (95) in a top plate of the harvester.

8. A combine harvester according to claim 6 or 7, **characterised in that** at least one abutment for one of the doors (94) is constituted by an outer edge of the other of the doors (96).

## Patentansprüche

1. Mähdrescher mit einem Dreschmechanismus zum Trennen von geerntetem Erntematerial in Körner und Erntematerial-Rest und mit einem Führungsmechanismus zum Lenken der Strömung des Erntematerial-Restes von dem Dreschmechanismus entlang eines von drei Pfaden, wobei der Führungsmechanismus zwei Ablenkklappen (94, 96) umfasst, die jeweils zwischen zwei Endpositionen bewegbar sind, **dadurch gekennzeichnet, dass** jede der Klappen des Führungsmechanismus auf einer Schwenkwelle (94b, 96b) gelagert ist, die mit einem Kurbelarm (94c, 96c) verbunden ist, und ein elastisches Element (200) die beiden Kurbelarme miteinander in einer derartigen Weise verbindet, dass jede Klappe unabhängig von der Position der anderen Klappe durch das elastische Element so vorgespannt wird, dass es in einer von zwei stabilen Endpositionen verbleibt und eine unstabile Sprungstellung durchläuft, wenn sie von einer stabilen Endposition zu der anderen bewegt wird.

2. Mähdrescher nach Anspruch 1, **dadurch gekennzeichnet, dass** zumindest einer der Kurbelarme (94c, 96c), mit dem das elastische Element (200) verbunden ist, als Teil eines Betätigungs-Handgriffes (94a, 96a) ausgebildet ist, der zur Umstellung der jeweiligen Klappe (94, 96) vorgesehen ist.

3. Mähdrescher nach Anspruch 1, **dadurch gekennzeichnet, dass** zumindest einer der Kurbelarme (94c, 96c) mit dem das elastische Element verbunden ist, getrennt von Betätigungs-Handgriffen (94a, 96a) ausgebildet ist, die zur Umstellung der Klappen (94, 96) verwendet werden.

4. Mähdrescher nach einem der vorhergehenden Ansprüche, **dadurch gekennzeichnet, dass** das elastische Element eine Gasdruckfeder (200) ist, die einen Dämpfer einschließt.

5. Mähdrescher nach einem der vorhergehenden Ansprüche, **dadurch gekennzeichnet, dass** Sensoren auf den Kurbelarmen (94c, 96c) oder den Betätigungs-Handgriffen (94a, 96a) zur Anzeige der derzeitigen Positionen der Klappen (94, 96) des Führungsmechanismus vorgesehen sind.

6. Mähdrescher nach einem der vorhergehenden Ansprüche, **dadurch gekennzeichnet, dass** in jede der stabilen Endpositionen die Außenkanten der Ablenkklappen (94, 96) fest gegen einen Anschlag (95) gehalten werden.

7. Mähdrescher nach Anspruch 6, **dadurch gekennzeichnet, dass** zumindest ein Anschlag durch eine Kerbe (95) in einer Deckplatte des Mähdreschers gebildet ist.

8. Mähdrescher nach einem der Ansprüche 6 oder 7, **dadurch gekennzeichnet, dass** zumindest ein Anschlag einer der Klappen (94) durch eine Außenkante der anderen der Klappen (96) gebildet ist.

## Revendications

1. Moissonneuse-batteuse comportant un mécanisme de battage pour séparer le produit récolté en grain et résidu de récolte et un mécanisme de guidage pour diriger le flux de résidu de récolte provenant du mécanisme de battage le long d'une de trois trajectoires, le mécanisme de guidage comprenant deux trappes de déviation (94, 96) qui peuvent chacune être déplacées entre deux positions finales, **caractérisée en ce que** chacune des trappes du mécanisme de guidage est supportée sur un axe de pivotement (94b, 96b) pourvu d'un bras de manivelle (94c, 96c) et un élément résilient (200) relie les deux bras de manivelle l'un à l'autre de telle manière que chaque trappe, indépendamment de la position de l'autre trappe, est poussée par l'élément résilient pour demeurer dans l'une des deux positions finales stables et passe par une position instable ayant un point dur lorsqu'elle est déplacée d'une position finale stable à l'autre.

2. Moissonneuse-batteuse selon la revendication 1, **caractérisée en ce qu'**au moins l'un des bras de manivelle (94c, 96c) auxquels l'élément résilient (200) est relié, est constitué en tant que partie d'un levier d'actionnement (94a, 96a) qui est prévu pour repositionner la trappe respective (94, 96).

3. Moissonneuse-batteuse selon la revendication 1, **caractérisée en ce qu'**au moins l'un des bras de manivelle (94c, 96c) auxquels l'élément résilient (200) est relié, est constitué séparément des leviers d'actionnement (94a, 96a) qui sont utilisés pour repositionner les trappes (94, 96).

4. Moissonneuse-batteuse selon l'une quelconque des revendications précédentes, **caractérisée en ce que** l'élément résilient est un vérin à gaz (200) qui comprend un amortisseur.

5. Moissonneuse-batteuse selon l'une quelconque des revendications précédentes, **caractérisée en ce que** des détecteurs sont présents sur les bras de manivelle (94c, 96c) ou les leviers d'actionnement (94a, 96a) pour indiquer les positions en cours des trappes (94, 96) du mécanisme de guidage.

6. Moissonneuse-batteuse selon l'une quelconque des revendications précédentes, **caractérisée en ce que** dans chacune des positions finales stables, les rebords extérieurs des trappes de déviation (94, 96) sont solidement maintenus contre un aboutement (95).

7. Moissonneuse-batteuse selon la revendication 6, **caractérisée en ce qu'**au moins un aboutement est constitué d'une échancrure (95) dans une tôle supérieure de la moissonneuse.

8. Moissonneuse-batteuse selon la revendication 6 ou 7, **caractérisée en ce qu'**au moins un aboutement pour une des trappes (94) est constitué d'un rebord extérieur de l'autre des trappes (96).
